# EUROPEAN PATENT APPLICATION

(11) **EP 3 291 607 A1**
(43) Date of publication of application: **07.03.2018**
(21) Application number: 16789509.3
(22) Date of filing: 22.04.2016
(51) Int. Cl.: H04W 48/06, H04W 24/04, H04W 28/02

(54) **MOBILITY MANAGEMENT EXCHANGE, COMMUNICATION SYSTEM, AND COMMUNICATION CONTROL METHOD**

(30) Priority: 01.05.2015 JP 2015094271; 15.05.2015 JP 2015100560; 06.08.2015 JP 2015156477
(71) Applicant: NTT DOCOMO, INC., Chiyoda-ku Tokyo 100-6150 (JP)
(72) Inventor: THAKOLSRI, Srisakul, 80687 Munich (DE); FUJISHIMA, Daisuke, Tokyo 100-6150 (JP); ABE, Motohiro, Tokyo 100-6150 (JP); NISHIMURA, Masaki, Tokyo 100-6150 (JP)
(74) Representative: Hoffmann Eitle
(86) International application number: PCT/JP2016/062752
(87) International publication number: WO 2016/178373

(57) **Abstract**

A mobility management switching center is for communicating with user equipment of a communication system that supports LTE or 3G, the mobility management switching center including a receiver that receives a session management signal from the user equipment; and a transmitter that transmits, when the session management signal is received, a restriction signal for instructing not to transmit a new session management signal to the user equipment.

## Description

### TECHNICAL FIELD

The present invention relates to a mobility management switching center, a communication system, and a communication control method.

### BACKGROUND ART

A communication system is achieved by a radio network including a base station; a core network including a switching center; and multiple units of user equipment. Standard specifications of communication schemes and communication interfaces for mobile communication are specified by the third generation partnership project (3GPP: The 3rd Generation Partnership Project).

A core network is formed of various devices; and, due to, for example, a failure of a certain device, a large processing load may be applied to another device.

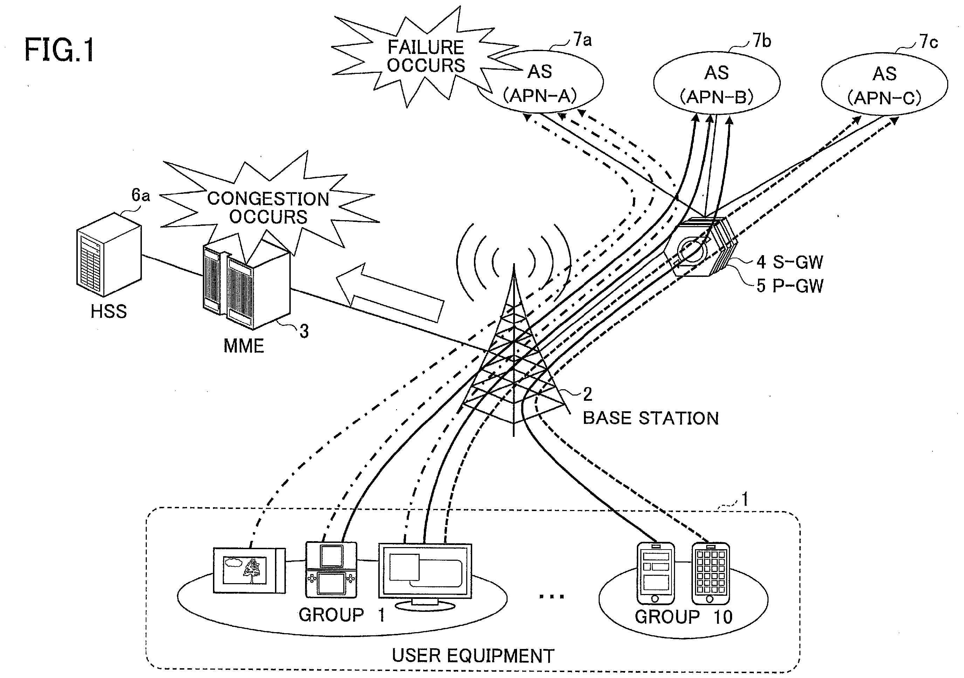

FIG. 1 is a diagram illustrating a situation where a MME is in congestion due to a failure on a network. It is assumed, in FIG. 1, that an AS (Application Server) 7a is associated with an APN (Access Point Name)-A, and that multiple units of user equipment 1 are connected to the AS 7a. Here, FIG. 1 illustrates a network of the LTE.

Suppose that some failure occurs in the AS 7a, and that communication is disabled between the AS 7a and user equipment. In this case, it is expected that the user equipment 1 sends, to the MME (Mobility Management Entity) 3, a signaling signal addressed to the APN-A multiple times so as to attempt to reconnect to the AS 7a. Then, the MME 3 is to receive a large amount of signaling signals from many units of user equipment 1, and it follows that a processing load on the MME 3 increases and congestion occurs.

Here, as one of congestion control methods for controlling a congestion state of the MME, a group specific NAS level congestion control method (Group Specific NAS level congestion control) has been specified (cf. Non-Patent Document 1, for example) such that units of user equipment are classified in advance into multiple groups within a core network, and, when the MME transitions to a congestion state, signaling signals from units of user equipment belonging to a specific group are restricted. According to a group specific NAS level congestion control method, by suppressing units of user equipment belonging to a specific group from transmitting session management signals associated with a specific APN for a certain period of time, the congestion state of the MME can be mitigated. Note that the certain period of time for which transmission is to be suppressed is referred to as a back-off timer.

By using FIG. 1, a specific example is described. FIG. 1 depicts that units of user equipment 1 are classified into group 1 through group 10. The MME 3 causes, for example, the units of user equipment belonging to the group 1 to be suppressed from transmitting session management signals associated with an APN-A for a certain period of time. By doing this, transmission of the session management signals from the units of user equipment 1 belonging to the group 1 is stopped, so that the congestion state of the MME 3 itself can be mitigated.

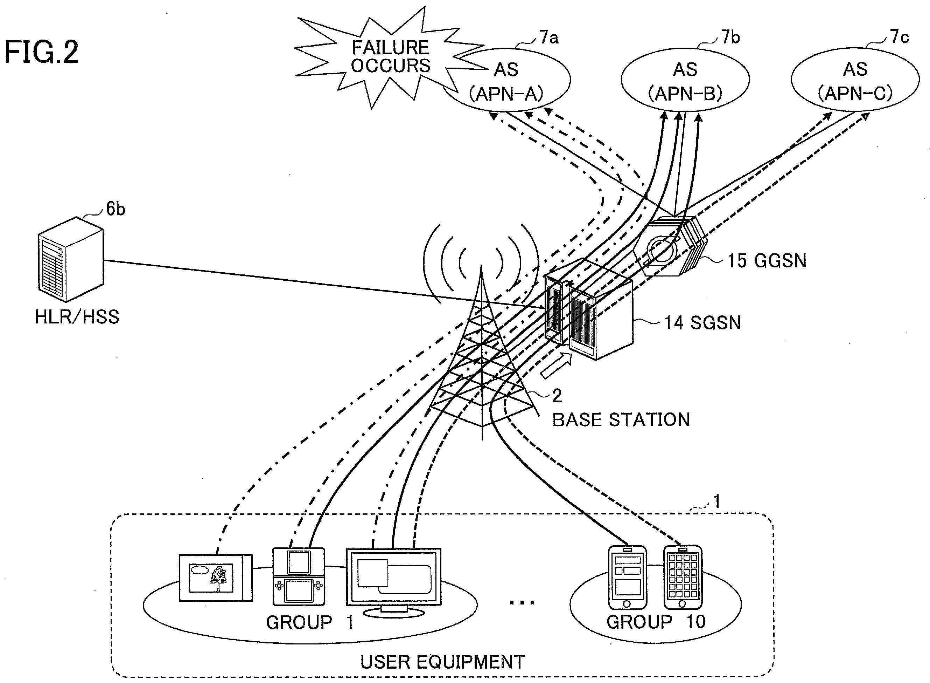

FIG. 2 is a diagram illustrating a situation where a SGSN is in congestion due to a failure on a network. FIG. 2 illustrates a 3G network. In FIG. 2, the SGSN 14 corresponds to the MME 3 and the S-GW 4 in FIG. 1; and the GGSN 15 corresponds to the P-GW 5 in FIG. 1.

### Prior Art Document

### [Non-Patent Document]

Non-Patent Document 1: 3GPP TS23.401 V13.2.0 (2015-03)
Non-Patent Document 2: 3GPP TS23.060 V13.2.0 (2015-03)

### SUMMARY OF INVENTION

### [PROBLEM TO BE SOLVED BY THE INVENTION]

As described above, by the group specific NAS level congestion control method, units of user equipment belonging to a specific group can be suppressed from transmitting session management signals associated with a specific APN for a certain period of time. However, even if transmission of session management signals associated with a specific APN is restricted, user equipment is able to transmit session management signals associated with another APN to the MME (or the SGSN). Namely, it can be expected that, in order to attempt to establish a connection with, instead of the restricted APN, another APN that is not restricted, user equipment that can connect to multiple APNs operates to transmit the session management signals associated with the other APN to the MME (or the SGSN).

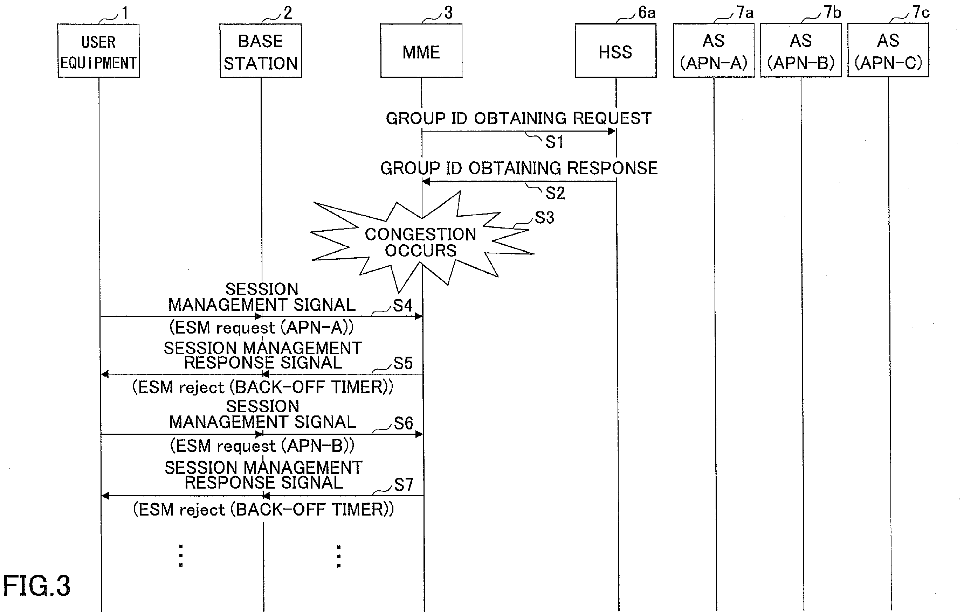

FIG. 3 is a sequence diagram for illustrating a problem with the group specific NAS level congestion control method (LTE). In FIG. 3, it is assumed that the units of user equipment 1 can connect to multiple ASs (7a through 7c).
Additionally, it is assumed that the MME 3 is preset to restrict session management signals from units of user equipment belonging to the group 1 when the MME 3 itself transitions to a congestion state.

First, the MME 3 obtains, from a HSS (Home Subscriber Server) 6, information for uniquely identifying a group to which user equipment belongs (which is referred to as a "group ID," hereinafter) at a timing at which the user equipment attaches (S1, S2), for example. Here, it is assumed that the group ID of the user equipment 1 is group 1.

Subsequently, suppose that congestion occurs in the MME 3 (S3), which is triggered by a failure occurred in the AS 7a. In order to reconnect to the AS 7a, the user equipment 1 transmits, to the MME 3, a session management signal (ESM (EPS Session Management) request) which specifies the APN-A (S4). The MME 3 determines that the session management signal from the user equipment 1 belonging to the group 1 is a target of the restriction; and transmits a session management response signal (ESM reject) including a back-off timer so as to suppress transmission of session management signals associated with the APN-A for a certain period of time (S5). The session management response signal (ESM reject) is the response signal associated with the session management signal transmitted at step S4, so that the user equipment UE determines that the session management signal associated with the APN-A may not be transmitted until expiration of the time period specified by the back-off timer.

Subsequently, the user equipment 1 transmits a session management signal (ESM request) specifying an APN-B to the MME 3 so as to connect to the AS 7b (S6). The MME 3 determines that the session management signal from the user equipment belonging to the group 1 is the target of the restriction; and transmits a session management response signal (ESM reject) including a back-off timer so as to suppress transmission of session management signals associated with the APN-B for a certain period of time (S7). The session management response signal (ESM reject) is the response signal associated with the session management signal transmitted at step S5, so that the user equipment UE determines that the session management signal associated with the APN-B may not be transmitted until expiration of the time period specified by the back-off timer.

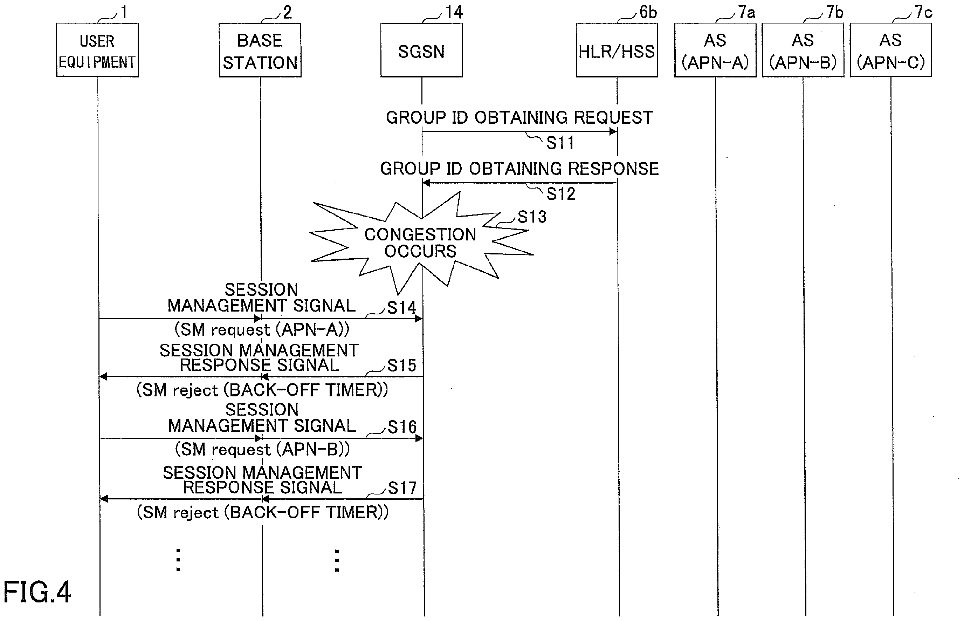

FIG. 4 is a sequence diagram for illustrating a problem with the group specific NAS level congestion control method (3G). Note that, in FIG. 4, the MME 3 illustrated in FIG. 3 is replaced with the SGSN 14. Furthermore, step S11 through step S17 of FIG. 4 correspond to step S1 through step S7, respectively.

As illustrated in FIG. 3 and FIG. 4, the group specific NAS level congestion control method can only restrict transmission of session management signals associated with specific APNs. Accordingly, when a session management signal (ESM Request (or SM Request)) associated with another APN that is different from a specific APN is received from the user equipment 1, the MME 3 (or the SGSN 14) is required to transmit a session management response signal (ESM reject (or SM Reject)) to the user equipment 1 again. Namely, in the usual group specific NAS level congestion control method, the MME 3 (or the SGSN 14) is required, for each APN specified by the user equipment 1, to repeatedly transmit the session management response signal (ESM reject (or SM Reject)) to the user equipment 1, so that the congestion state may not be efficiently mitigated.

The disclosed technology has been developed in view of the above description, and an object is to provide technology that allows a congestion state of a mobility management switching center to be efficiently mitigated.

### [MEANS FOR SOLVING THE PROBLEM]

A mobility management switching center according to the disclosed technology is for communicating with user equipment of a communication system that supports LTE or 3G, the mobility management switching center including a receiver that receives a session management signal from the user equipment; and a transmitter that transmits, when the session management signal is received, a restriction signal for instructing not to transmit a new session management signal to the user equipment.

Further, a communication system according to the disclosed technology supports LTE or 3G, and includes a mobility management switching center and user equipment, wherein the mobility management switching center includes a first receiver that receives a session management signal from the user equipment; and and a first transmitter that transmits, to the user equipment, a restriction signal for instructing not to transmit a new session management signal, when the session management signal is received, and wherein the user equipment includes a second receiver that receives the restriction signal; and a second transmitter that controls, when the restriction signal is received from the mobility management switching center, not to transmit a new session management signal to the mobility management switching center.

Further, a communication control method according to the disclosed technology is to be executed in a communication system that supports LTE or 3G and that includes a mobility management switching center and user equipment, the communication control method including a step of receiving, by the mobility management switching center, a session management signal from the user equipment; a step of transmitting, to the user equipment by the mobility management switching center, a restriction signal for instructing not to transmit a connection request signal with respect to all APNs when the session management signal is received; a step of receiving the restriction signal by the user equipment; and a step of controlling, by the user equipment, not to transmit a new session management signal to the mobility management switching center when the restriction signal is received from the mobility management switching center.

### [ADVANTAGE OF THE INVENTION]

According to the disclosed technology, technology is provided that allows a congestion state of a mobility management switching center to be efficiently mitigated.

### BRIEF DESCRIPTION OF DRAWINGS

FIG. 1 is a diagram illustrating a situation where a MME is in congestion due to a failure on a network;
FIG. 2 is a diagram illustrating a situation where a SGSN is in congestion due to a failure on a network;
FIG. 3 is a sequence diagram for illustrating a problem with a group specific NAS level congestion control method (LTE);
FIG. 4 is a sequence diagram for illustrating a problem with a group specific NAS level congestion control method (3G);
FIG. 5 is a diagram illustrating an example of a system configuration of a communication system (LTE) according to an embodiment;
FIG. 6 is a diagram illustrating an example of a system configuration of a communication system (3G) according to the embodiment;
FIG. 7 is a diagram illustrating an example of a functional configuration of user equipment according to the embodiment;
FIG. 8 is a diagram illustrating an example of a functional configuration of a base station according to the embodiment;
FIG. 9 is a diagram illustrating an example of a functional configuration of a MME according to the embodiment;
FIG. 10 is a diagram illustrating an example of a functional configuration of a SGSN according to the embodiment;
FIG. 11 is a diagram illustrating an example of a hardware configuration of the user equipment according to the embodiment;
FIG. 12 is a diagram illustrating an example of a hardware configuration of the base station according to the embodiment;

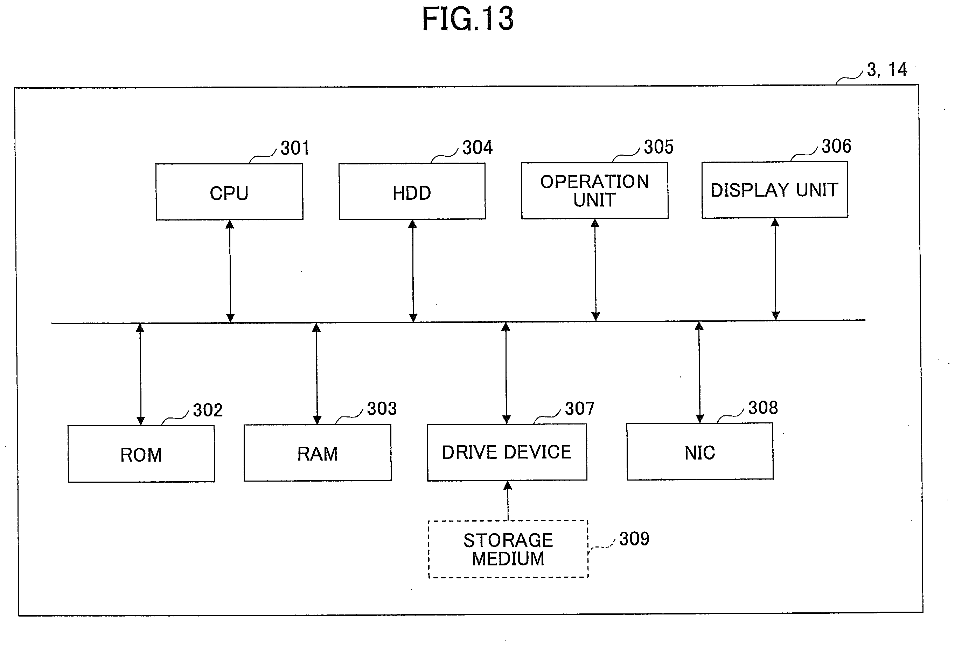

FIG. 13 is a diagram illustrating an example of hardware configurations of the MME and the SGSN according to the embodiment;
FIG. 14 is a sequence diagram illustrating an example of a processing procedure (version 1) to be executed by the communication system (LTE) according to the embodiment;
FIG. 15 is a sequence diagram illustrating an example of a processing procedure (version 2) to be executed by the communication system (LTE) according to the embodiment;
FIG. 16 is a sequence diagram illustrating an example of a processing procedure (version 1) to be executed by the communication system (3G) according to the embodiment; and
FIG. 17 is a sequence diagram illustrating an example of a processing procedure (version 2) to be executed by the communication system (3G) according to the embodiment.

### EMBODIMENTS OF THE INVENTION

An embodiment of the present invention is described below by referring to the drawings. Note that the embodiment described below is merely an example, and the embodiment to which the present invention is applied is not limited to the following embodiment. For example, as a communication system according to the embodiment, a system is assumed that is based on a scheme conforming to the 3G or the LTE; however, the present invention is not limited to the 3G or the LTE, and it can be applied to another scheme. Note that, in the scope of the present specification and the claims, "LTE" is used in a broad sense including, not only a communication scheme corresponding to Release 8 or 9 of the 3GPP, but also a communication scheme corresponding to Release 10, 11, 12, or on or after 13 of the 3GPP. Furthermore, for the communication system according to the embodiment, a GGSN is assumed as a gateway device for connecting to an external network (e.g., the AS 7); however, a P-GW may be utilized for this. Furthermore, in accordance with this, a S-GW may be utilized as a device for relaying a U-plane signal.

Note that, in the following description, a session management signal associated with a specific APN means a session management signal for executing a process for a specified APN. Furthermore, a session management signal not associated with an APN means a session management signal for executing a process not associated with the APN.

### <Overview>

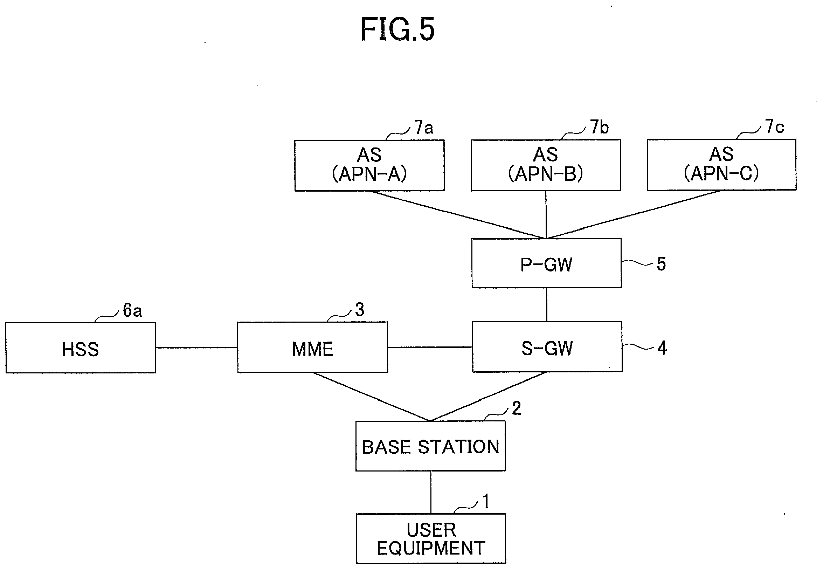

FIG. 5 is a diagram illustrating an example of a system configuration of a communication system (LTE) according to the embodiment. As illustrated in FIG. 5, the communication system according to the embodiment includes user equipment 1; a base station 2; a MME (Mobility Management Entity) 3; a S-GW (Serving Gateway) 4; a P-GW (Packet Data Network Gateway) 5; a HSS 6a; an AS 7a; an AS 7b; and an AS 7c. The MME 3, the S-GW 4, and the P-GW 5 are devices belonging to an EPC (Evolved Packet Core). Note that, in FIG. 5, three ASs (7a through 7c) are depicted; however, it is for convenience of depiction, so that four or more ASs may be connected to the P-GW 5, or one or two ASs may be connected to the P-GW. In the following description, any AS of multiple ASs (7a through 7c) is represented by "AS 7." Note that the system configuration illustrated in FIG. 5 only illustrates devices that are particularly related to the embodiment of the present invention; and it includes a device, which is not depicted, for executing operation at least conforming to the LTE.

The user equipment 1 is provided with a function for executing, through radio, communication with the eNB 2; with each device belonging to the EPC; and with the AS 7. The user equipment 1 is, for example, a mobile phone, a smart phone, a tablet, a mobile router, a personal computer, a wearable terminal, and so forth. The user equipment 1 may be any user equipment 1 if it is a device including a communication function.

The base station 2 is a base station (eNB: evolved Node B) in the LTE; and executes communication with the user equipment 1 through radio. Furthermore, the base station 2 is connected to the MME 3 and the S-GW 4; and relays C-Plane signals to be transmitted and received between the user equipment 1 and the MME 3, and U-Plane signals to be transmitted and received between the user equipment 1 and the S-GW 4.

The MME 3 is connected to the eNB 2 and the S-GW 4; and is a device for providing a mobility control function of the user equipment 1, an EPC bearer control function of the S-GW 4, and so forth.

The S-GW 4 is a serving packet switch; and relays U-plane signals between the eNB 2 and the P-GW 5.

The P-GW 5 is a gateway device for the EPC to connect to an external network (e.g., the AS 7); and performs, for example, allocation of an IP address to the user equipment 1.

The AS 7 directly communicates with the user equipment 1 by U-plane signals; and provides a predetermined service to the user equipment 1. The predetermined service includes, for example, Internet access, a cloud service, provision of various portal sites, and so forth; however, it is not limited to these, and various services can be included.

Furthermore, the AS 7 is such that each AS 7 is associated with a specific APN. In the embodiment, the AS 7a, the AS 7b, and the AS 7c are respectively associated with an APN-A, an APN-B, and an APN-C. The user equipment 1 becomes capable of communicating with a predetermined AS 7 by transmitting a signaling signal to the MME 3 while specifying an APN associated with the AS 7, which is desired to communicate with (it is desirable to establish a connection with it).

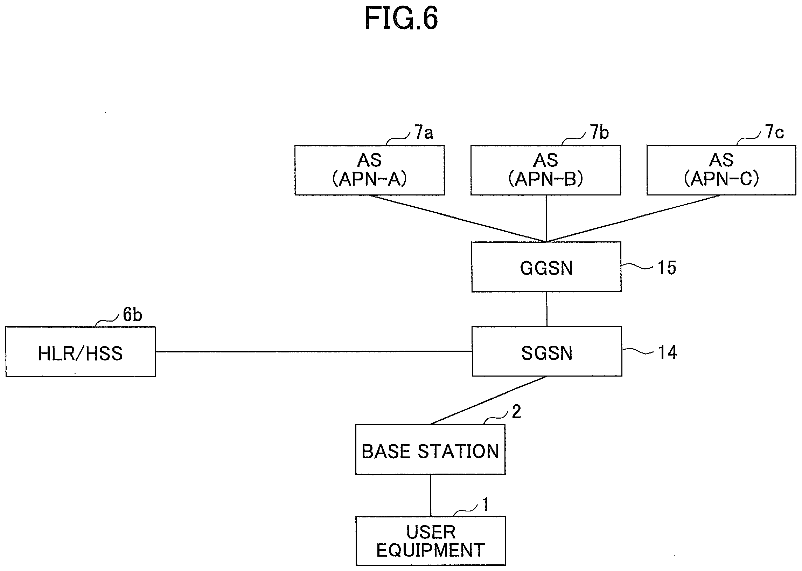

FIG. 6 is a diagram illustrating an example of a system configuration of a communication system (3G) according to the embodiment. As illustrated in FIG. 6, the communication system according to the embodiment includes user equipment 1; a base station 2; a SGSN (Serving GPRS Support Node) 3; a GGSN (Gateway GPRS Support Node) 4; a HLR/HSS (Home Location Register/Home Subscriber Server) 6b; an AS 7a; an AS 7b; and an AS 7c. The SGSN 14 and the GGSN 4 are devices belonging to the 3G. Note that, in FIG. 6 three ASs (7a through 7c) are depicted; however, it is for convenience of depiction, so that 4 or more ASs may be connected to the GGSN 4; or 1 or 2 ASs may be connected to the GGSN. Note that the system configuration illustrated in FIG. 6 only shows devices particularly related to the embodiment of the present invention; and it includes, at least, a device, which is not depicted, for executing operation conforming to the 3G. Points that are not referred to in FIG. 6 may be the same as those of FIG. 5.

The user equipment 1 of FIG. 6 is provided with a function for communicating, through radio, with the RNC 2; with each device belonging to the 3G; and with the AS 7.

The base station 2 of FIG. 6 is a base station (RNC: Radio Network Controller) in the 3G; and performs communication with the user equipment 1 through radio. Further, the base station 2 is connected to the SGSN 14 and the GGSN 15; and relays C-Plane signals and U-plane signals transmitted and received between the user equipment 1 and the SGSN 14.

The SGSN 14 is connected to the RNC 2 and GGSN 4; and is a device for providing a mobility control function, a bearer control function, and so forth of the user equipment 1.

The GGSN 15 is a gateway device for connecting with an external network (e.g., the AS 7); and performs, for example, provision of an IP address to the user equipment 1.

In the communication system according to the embodiment, when congestion occurs in the MME 3 (or the SGSN 14), the MME 3 (or the SGSN 14) instructs the user equipment 1 belonging to a group that is a target of restriction not to transmit a session management signal for a certain period of time. Consequently, C-plane signals transmitted from each user equipment 1 to the MME (or the SGSN 14) are reduced, and the congestion state of the MME 3 (or the SGSN 14) can be efficiently mitigated.

### <Functional configuration>

In the following, examples of functional configurations are described for the user equipment 1, the base station 2, the MME 3, and the SGSN 14 for executing operation according to the embodiment of the present invention.

### (User equipment)

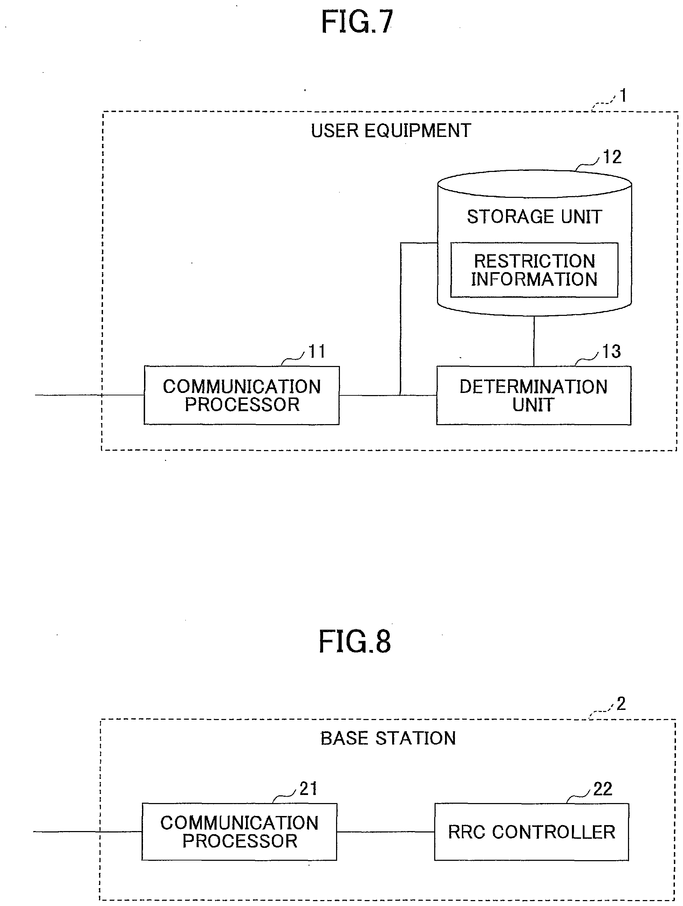

FIG. 7 is a diagram illustrating an example of a functional configuration of the user equipment according to the embodiment. As illustrated in FIG. 7, the user equipment 1 includes a communication processor 11; a storage unit 12; and a determination unit 13. Note that FIG. 7 only illustrates, in the user equipment 1, functional units that are particularly related to the embodiment of the present invention; and includes functions, which are not depicted, for executing operation conforming to, at least, the LTE (or the 3G). Further, the functional configuration illustrated in FIG. 7 is merely an example. The functional division and names of functional units may be any division and names, provided that the operation according to the embodiment can be executed.

The communication processor 11 includes a function for processing various types of signals to be transmitted and received among the base station 2; the MME 3 (or the SGSN 14); and the S-GW 4 (or the GGSN 15). The various types of signals include physical layer signals transmitted to and received from the base station 2; various types of signals of a layer 2 and a layer 3 (RRC: Radio Resource Control); and NAS (Non Access Stratum) messages transmitted to and received from the MME 3 (or the SGSN 14); IP packets of a U-plane, and so forth.

The storage unit 12 stores "restriction information" indicating a time period (back-off timer) during which transmission of a session management signal to the MME 3 (or the SGSN 14) is disallowed. The restriction information is reported from the MME 3 (or the SGSN 14); and stored in the storage unit 12 through the communication processor 11.

The determination unit 13 determines, based on the restriction information, whether it is possible to transmit, for the communication processor 11, a session management signal to the MME 3 (or the SGSN 14). More specifically, when the communication processor 11 attempts to transmit a session management signal to the MME 3 (or the SGSN 14), the determination unit 13 refers to the restriction information stored in the storage unit 12. For a case where the current time corresponds to a time period during which transmission of a session management signal to the MME 3 (or the SGSN 14) is disallowed, the determination unit 13 reports to the communication processor 11 that transmission of a session management signal is suppressed. For a case where it does not corresponds to a time period where transmission of a session management signal to the MME 3 (or the SGSN 14) is disallowed (for a case where the back-off timer has expired), it is reported to the communication processor 11 that transmission of a session management signal is allowed.

Furthermore, for a case where a session management signal is a signal related to an emergency call or a priority call, the determination unit 13 may report to the communication processor 11 that transmission of a session management signal is allowed, even if the current time corresponds to the time period during which transmission of a session management signal to the MME 3 (or the SGSN 14) is disallowed. Here, the emergency call is a communication call directed to an emergency agency, such as a police station or a fire station. The priority call is a specific communication call that is to be preferentially handled; and is, for example, a communication call to be originated from the user equipment 1 to which access classes of 11 through 15 are allocated. The access classes are stored in a USIM (Universal Subscriber Identity Module); and are determined at a time of contract. Furthermore, in the embodiment, the user equipment 1 can handle, for example, a communication call, which is directed to a specific APN and which is performed by an application intended for use during disaster, as a priority call.

### (Base station)

FIG. 8 is a diagram illustrating an example of a functional configuration of a base station according to the embodiment. As illustrated in FIG. 8, the base station 2 includes a communication processor 21; and a RRC controller 22. Note that FIG. 8 only illustrates, in the base station 2, functional units that are particularly related to the embodiment of the present invention; and includes functions, which are not depicted, for executing operation conforming to, at least, the LTE (or the 3G). Further, the functional configuration illustrated in FIG. 8 is merely an example. The functional division and names of functional units may be any division and names, provided that the operation according to the embodiment can be executed.

The communication processor 21 includes a function for processing various types of signals to be transmitted and received among the user equipment 1; the MME 3; and the S-GW 4 (or the user equipment 1 and the SGSN 14). The various types of signals include physical layer signals transmitted to and received from the user equipment 1; various types of signals of a layer 2; various types of signals related to the S1-AP (Sl-Application Protocol) transmitted to and received from the MME 3 (or RANAP (Radio Access Network Application Part) to be transmitted to and received from the SGSN 14); and various types of signals related to the GTP-U (GPRS Tunneling Protocol for User Plane). Furthermore, the communication processor 21 relays NAS messages to be transmitted and received between the user equipment 1 and the MME 3 (or the SGSN 14).

The RRC controller 22 includes a function for processing various types of signals of a layer 3 (RRC) to be transmitted to and received from the user equipment 1.

### (MME)

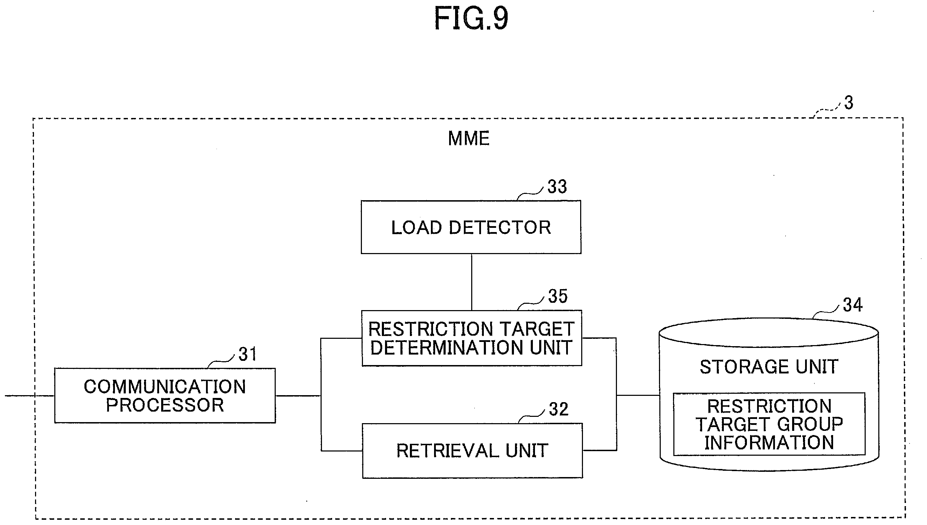

FIG. 9 is a diagram illustrating an example of a functional configuration of the MME according to the embodiment. As illustrated in FIG. 9, the MME 3 includes a communication processor 31; a retrieval unit 32; a load detector 33; a storage unit 34; and a restriction target determination unit 35. Note that FIG. 9 only illustrates, in the MME 3, functional units particularly related to the embodiment of the present invention; and includes functions, which are not depicted, for executing operation conforming to, at least, the LTE. Further, the functional configuration illustrated in FIG. 9 is merely an example. The functional division and names of functional units may be any division and names, provided that the operation according to the embodiment can be executed.

The communication processor 31 includes a function for processing various types of signals to be transmitted and received among the user equipment 1, the S-GW 4, and the HSS 6a. The various types of signals include NAS messages to be transmitted to and received from the user equipment 1.

The retrieval unit 32 retrieves a group ID of the user equipment 1 from the HSS 6a; and reports it to the restriction target determination unit 35.

The load detector 33 monitors processing load on the MME 3 itself; and determines whether the MME 3 itself is in an overloaded state (congestion state) by comparing a fixed threshold value that is defined in advance and a processing load on the MME 3 itself. Furthermore, the load detector 33 may determine the congestion state by dividing it into multiple levels (steps). For example, the load detector 33 may divide a congestion state into three levels, and if a CPU load is in a range from a% to b%, the congestion level may be determined to be 1; if the CPU load is in a range from b% to c%, the congestion level may be determined to be 2; and if the CPU load is in a range from c% to d%, the congestion level may be determined to be 3. There is no particular limitation for the number of the levels of dividing the congestion state.

The storage unit 34 stores "restriction target group information" indicating a group ID that is the target for which a session management signal is restricted. The restriction target group information may store, for example, only the group ID. Alternatively, the restriction target group information may store, for example, congestion levels and associated one or more group IDs in such a way that, if the congestion level is 1, the user equipment 1 belonging to the group 1 is the target of restriction; and if the congestion level is 2, the user equipment 1 belonging to the group 1 and the group 2 is the target of restriction. Furthermore, the restriction target group information may be determined based on operator's operation policy. The restriction target group information may be stored in advance in the storage unit 34, for example, by an O & M (Operation & Management) system.

The restriction target determination unit 35 obtains, from the storage unit 34, a group ID which is the target for which a session management signal is to be restricted; and determines, by comparing the obtained group ID with the group ID of the user equipment 1 retrieved by the retrieval unit 32, whether transmission of a session management signal is suppressed for the user equipment 1 for a certain period of time. Note that, when the group ID, which is the target for which a session management signal is to be restricted, is obtained from the storage unit 34, the restriction target determination unit 35 may obtain a group ID corresponding to the congestion level that is detected by the load detector 33.

### (SGSN)

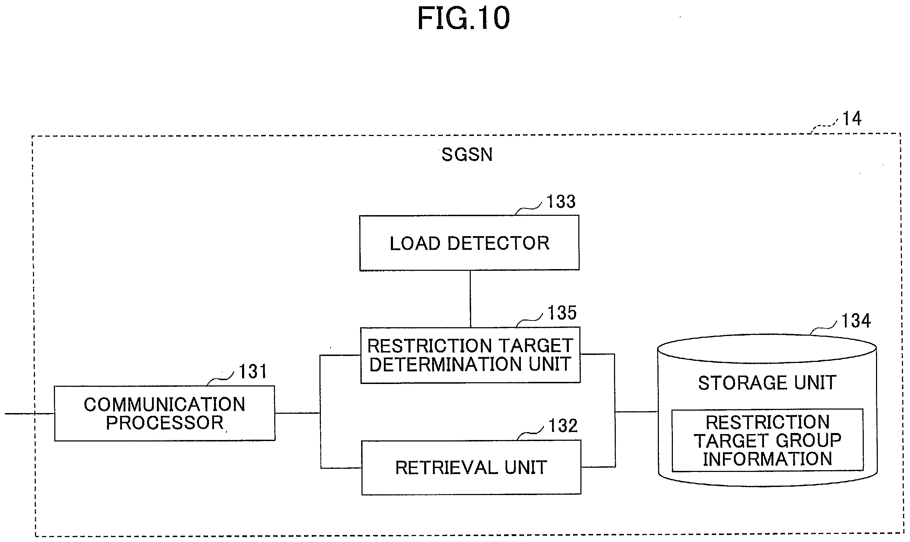

FIG. 10 is a diagram illustrating an example of a functional configuration of the SGSN according to the embodiment. As illustrated in FIG. 10, the SGSN 14 includes a communication processor 131; a retrieval unit 132; a load detector 133; a storage unit 134; and a restriction target determination unit 135. Note that FIG. 10 only illustrates, in the SGSN 14, functional units that are particularly related to the embodiment of the present invention; and includes functions, which are not depicted, for executing operation conforming to, at least, the 3G. Further, the functional configuration illustrated in FIG. 10 is merely an example. The functional division and names of functional units may be any division and names, provided that the operation according to the embodiment can be executed.

The communication processor 131, the retrieval unit 132, the load detector 133, the storage unit 134, and the restriction target determination unit 135 of FIG. 10 respectively correspond to the communication processor 31; the retrieval unit 32; the load detector 33; the storage unit 34; and the restriction target determination unit 35 of FIG. 9, so that the description is omitted.

### <Hardware configuration>

### (User equipment)

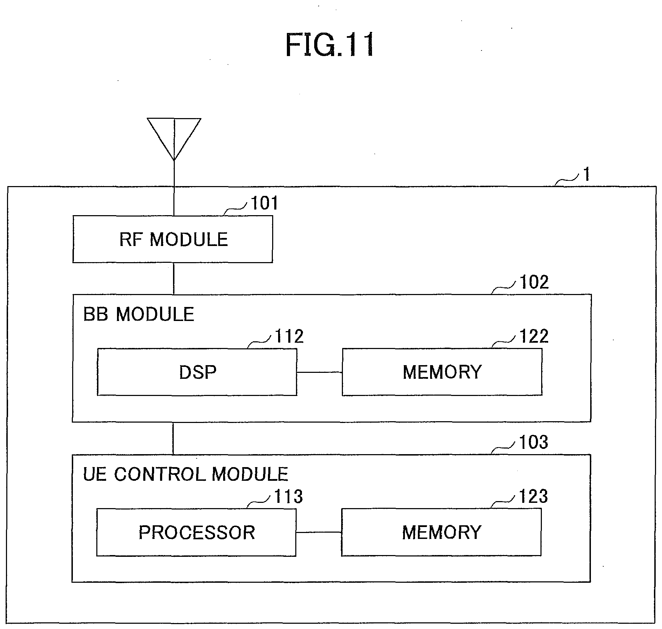

FIG. 11 is a diagram illustrating an example of a hardware configuration of the user equipment according to the embodiment. As illustrated in FIG. 11, the user equipment UE includes an RF (Radio Frequency) module 101 that performs processing related to radio signals; a BB (Base Band) module 102 that performs baseband signal processing; and a UE control module 103 that performs processing of upper layers.

The RF module 101 generates a radio signal to be transmitted from an antenna by applying D/A (Digital-to-Analog) conversion, modulation, frequency conversion, power amplification, and so forth to a digital baseband signal received from the BB module 102. Furthermore, by applying frequency conversion, A/D (Analog to Digital) conversion, demodulation, and so forth to the received radio signal, a digital baseband signal is generated; and it is passed to the BB module 102. The RF module 101 includes, for example, a part of the communication processor 11 shown in FIG. 7.

The BB module 102 performs processing for mutually converting an IP packet and a digital baseband signal. A DSP (Digital Signal Processor) 112 is a processor that performs signal processing in the BB module 102. A memory 122 is used as a work area of the DSP 112. The BB module 102 includes, for example, a part of the communication processor 11 illustrated in FIG. 7.

The UE control module 103 performs protocol processing of an IP layer, processing of various types of applications, and so forth. A processor 113 is a processor that performs a process to be executed by the UE control module 103. A memory 123 is used as a work area of the processor 113. The UE control module 103 includes, for example, the storage unit 12 and the determination unit 13, which are illustrated in FIG. 7.

### (Base station)

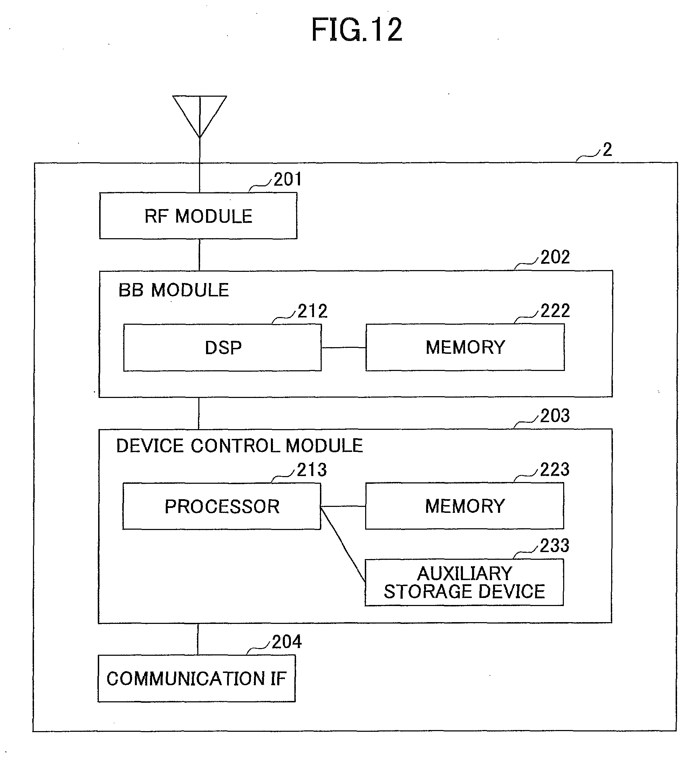

FIG. 12 is a diagram illustrating an example of a hardware configuration of the base station according to the embodiment. As illustrated in FIG. 12, the base station eNB includes an RF module 201 that performs processing related to radio signals; a BB module 202 that performs baseband signal processing; a device control module 203 that performs processing of upper layers; and a communication IF 204 that is an interface for establishing connection to a network.

The RF module 201 generates a radio signal to be transmitted from an antenna by applying D/A conversion, modulation, frequency conversion, power amplification, and so forth to a digital baseband signal received from the BB module 202. Furthermore, by applying frequency conversion, A/D conversion, demodulation, and so forth to the received radio signal, a digital baseband signal is generated; and it is passed to the BB module 202. The RF module 201 includes, for example, a part of the communication processor 31 shown in FIG. 9.

The BB module 202 performs processing for mutually converting an IP packet and a digital baseband signal. A DSP 212 is a processor that performs signal processing in the BB module 202. A memory 222 is used as a work area of the DSP 212. The BB module 202 includes, for example, a part of the communication processor 31 illustrated in FIG. 9.

The device control module 203 performs protocol processing of an IP layer, processing of OAM (Operation and Maintenance), and so forth. A processor 213 is a processor that performs a process to be executed by the device control module 203. A memory 223 is used as a work area of the processor 213. An auxiliary storage device 233 is an HDD, for example; and stores various types of setting information and so forth for operating the base station eNB itself. The device control module 203 includes, for example, the retrieval unit 32; the load detector 33; the storage unit 34; and the restriction target determination unit 35, which are illustrated in FIG. 9.

### (MME, SGSN)

FIG. 8 is a diagram illustrating examples of hardware configurations of the MME and the SGSN. Each of the MME 3 and the SGSN 14 according to the embodiment includes a CPU 301; a ROM 302; a RAM 303; a HDD 304; an operation unit 305; a display unit 306; a drive device 307; and a NIC (Network Interface card) 308.

The CPU 301 is a processor for executing overall control of the MME 3 and the SGSN 14. The CPU 301 executes programs, such as an operating system, an application, and various types of services stored in the HDD 304; and implements various types of functions of the MME 3 and the SGSN 14. The ROM 302 stores various types of programs; data to be utilized by a program, and so forth. The RAM 303 is used as a storage area for loading a program, a work area for the loaded program, and so forth. The HDD 304 stores various types of information, programs, and so forth.

The operation unit 305 is hardware for receiving an input operation from a user; and it is a keyboard or a mouse, for example. The display unit 306 is hardware that displays for a user.

The drive device 307 reads a program from a storage medium 309 storing the program. The program that is read by the drive device 307 is installed in the HDD 304, for example. The NIC 308 is a communication interface for connecting the MME 3 and the SGSN 14 to a network; and for transmitting and receiving data.

Here, the storage medium 309 is a non-transitory (non-transitory) storage medium. As examples of the storage medium 309, there are a magnetic storage medium, an optical disk, a magnet-optical storage medium, a non-volatile memory, and so forth.

### <Processing procedure>

### [LTE]

### (Processing procedure (version 1))

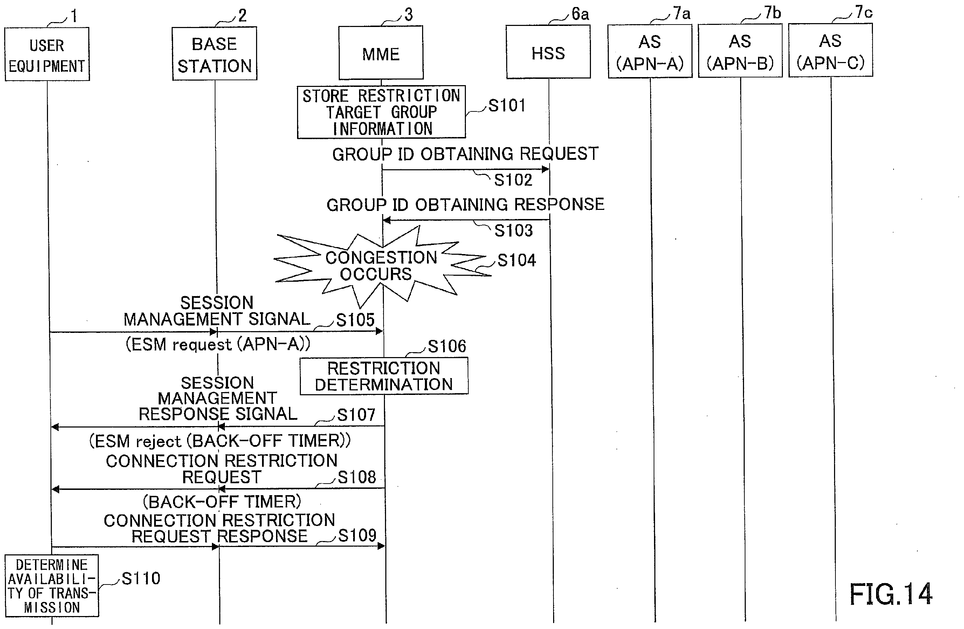

FIG. 14 is a sequence diagram illustrating an example of a processing procedure (version 1) to be performed by the communication system (LTE) according to the embodiment.

At step S101, the storage unit 34 of the MME 3 stores the restriction target group information in advance. The restriction target group information may be stored in advance, for example, by the O & M system.

At step S102, the retrieval unit 32 of the MME 3 transmits a group ID obtaining request to the HSS 6a so as to obtain the group ID to which the user equipment 1 belongs. The group ID obtaining request includes an identifier (e.g., IMSI, TMSI, and MSISDN) for uniquely identifying the user equipment 1. Note that the processing procedure at step S102 may be performed when the user equipment 1 requests an attach process from the MME 3; or may be performed at another timing at which the user equipment 1 accesses the MME 3.

At step S103, the HSS 6a transmits a group ID obtaining response to the MME 3. The group ID obtaining response includes the group ID of the user equipment 1. The retrieval unit 32 of the MME 3 associates the received group ID of the user equipment 1 with the identifier for uniquely identifying the user equipment 1; and reports these to the restriction target determination unit 35. Here, it is assumed that the group ID of the user equipment 1 is "group 1."

As described above, the processing procedure from step S101 to step S103 is the processing procedure to be performed prior to occurrence of the congestion in the MME 3. In the following, the processing procedure is described, which is to be performed when the congestion occurs in the MME 3.

At step S104, the load detector 33 of the MME 3 detects that congestion occurs in the MME 3.

At step S105, the communication processor 11 of the user equipment 1 transmits a session management signal (ESM Request) that specifies the APN-A to the MME 3, for a reason, for example, that it is desirable to establish a connection with the AS 7a again. Specifically, the ESM Request is a NAS message, such as PDN Connectibity Request, Bearer Resource Allocation Request, and Bearer Resource Modification Request.

At step S106, the restriction target determination unit 35 of the MME 3 searches the restriction target group information for and retrieves a group ID which is the target for which a session management signal is to be restricted; and confirms whether the group ID of the user equipment 1 obtained at step S103 is included in the group ID which is the target of restriction. When it is determined that the group ID of the user equipment 1 is included in the group ID which is the target of restriction, the restriction target determination unit 35 determines that it is required for the user equipment 1 to suppress transmission of a session management signal for a certain period of time; and proceeds to the processing procedure at step S107. However, if the group ID of the user equipment 1 is not included in the group ID which is the target of the restriction, the restriction target determination unit 35 determines that it is not required for the user equipment 1 to suppress transmission of a session management signal for a certain period of time; and continues call processing in accordance with the processing procedure specified for the usual LTE.

Note that, when the session management signal (ESM Request) received at step S105 is a signal related to an emergency call or a priority call, the restriction target determination unit 35 continues call processing according to the processing procedure specified for the usual LTE without performing the processing procedure at step S106. In the following, the description is continued while assuming that the group ID which is the target of restriction includes the group 1, and a determination is made that it is required for the user equipment 1 to suppress transmission of a session management signal for a certain period of time (namely, a determination is made to proceed to step S107).

At step S107, the communication processor 31 of the MME 3 transmits a session management response signal (ESM reject) including a back-off timer to the user equipment 1 so as to respond to the session management signal received at the processing procedure of step S106.

At step S108, the communication processor 31 of the MME 3 transmits a connection restriction request signal to the user equipment 1. The connection restriction request signal includes a back-off timer (the time period during which transmission a session management signal to the MME 3 is disallowed). Here, the connection restriction request signal may be a NAS message. The communication processor 11 of the user equipment 1 stores the back-off timer included in the received connection restriction request signal in the restriction information in the storage unit 12.

At step S109, the communication processor 11 of the user equipment 1 transmits the connection restriction request response signal to the MME 3. Here, the connection restriction request response signal may be a NAS message.

At step S110, for a case where it is attempted to transmit a session management signal to the MME 3, the communication processor 11 of the user equipment 1 queries permissibility/impermissibility of transmission of a session management signal to the determination unit 13. When the back-off timer has expired, or when the session management signal is a signal relating to an emergency call or a priority call, the determination unit 13 allows transmission of the session management signal. However, when the back-off timer has not expired, and when the session management signal is not a signal related to an emergency call nor a priority call, the determination unit 13 disallows transmission of the session management signal.

In the processing procedure described above by using FIG. 14, the process may proceed to the processing procedure of step S108 without performing the processing procedure at step S107. Furthermore, the MME 3 may perform the processing procedure on and after step S108, regardless of whether a session management signal is received at the processing procedure of step S105.

As described above, according to the processing procedure illustrated in FIG. 14, by only transmitting a single signal (the connection restriction request signal) to the user equipment 1, the MME 3 can instruct the user equipment 1 not to transmit a session management signal to the MME 3 subsequently.

In a usual group specific NAS level congestion control method, only transmission of a session management signal associated with a specific APN can be restricted. Accordingly, when a session management signal (ESM Request) associated with another APN that is different from the specific APN is received from the user equipment, the MME is required to transmit a session management response signal (ESM reject) again.

In contrast, according to the embodiment, the MME 3 can uniformly suppress the user equipment 1 from transmitting session management signals. Namely, the MME 3 is not required to repeatedly transmit, for each APN, a session management response signal (ESM reject) to the user equipment 1, so that a congestion state of the MME 3 can be efficiently mitigated.

Note that the processing procedure illustrated by using FIG. 14 may be applied to a mobility management signal (Mobility Management Signal) transmitted from the user equipment 1. For example, in the processing procedure at step S110, the communication processor 11 of the user equipment 1 that receives the connection restriction request signal may be disallowed to transmit a mobility management signal to the MME 3 until expiration of the back-off timer. Mobility management signals that are targets of restriction include a mobility management signal associated with a specific APN (a mobility management signal for performing a process for the specified APN) and/or a mobility management signal not associated with an APN (a mobility management signal for performing a process which is not related to the APN). The mobility management signal is, for example, an Attach Request, a TA (Tracking Area) Update, a Service Request, and so forth. In this manner, a congestion state of the MME 3 can be efficiently mitigated.

### (Processing procedure (version 2))

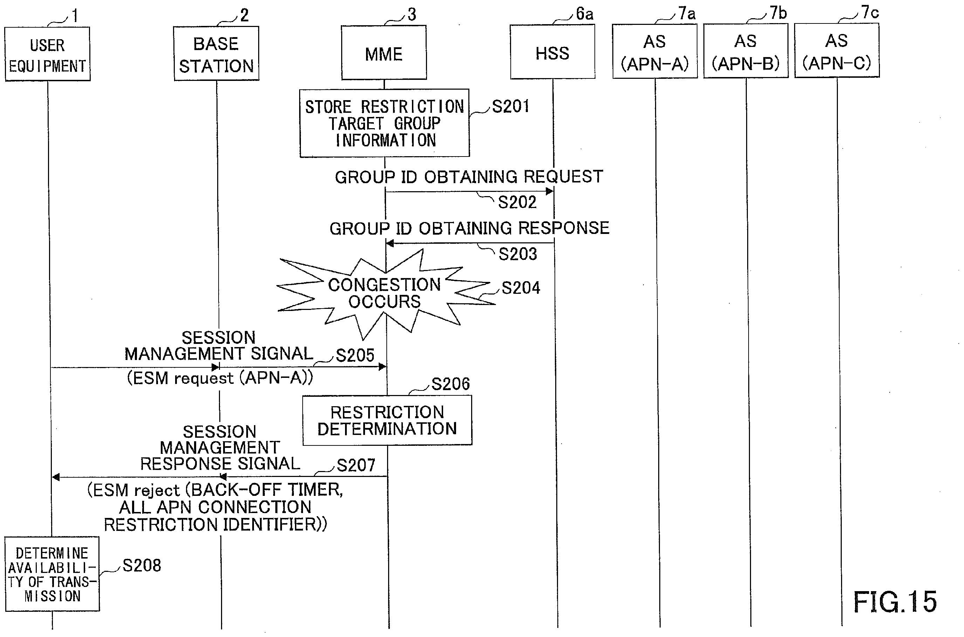

FIG. 15 is a sequence diagram illustrating an example of a processing procedure (version 2) to be executed by the communication system (LTE) according to the embodiment. In the processing procedure (version 2), instead of transmitting the connection restriction request signal, the MME 3 includes an identifier for instructing to uniformly restrict transmission of session management signals in a session management response signal (ESM reject), and transmits it. Here, points that are not particularly referred to may be the same as those of FIG. 14.

The processing procedures from step S201 to step S206 are the same as the processing procedures from step S101 to step S106 of FIG. 14, respectively, so that the descriptions are omitted. At step S207, the communication processor 31 of the MME 3 transmits a session management response signal (ESM reject) to the user equipment 1. The session management response signal includes "an all APN connection restriction identifier" for instructing to uniformly restrict transmission of session management signals, and "a back-off timer (a time period during which transmission of a session management signal to the MME 3 is disallowed)." The communication processor 11 of the user equipment 1 stores, in the restriction information in the storage unit 12, a back-off timer included in the received session management response signal. Note that, the all APN connection restriction identifier may be referred to as "an All APN congestion indicator," for example.

The processing procedure at step S208 is the same as that of step S110 in FIG. 14, so that the description is omitted.

As described above, according to the processing procedure illustrated in FIG. 15, by only transmitting a single signal (the session management response signal) to the user equipment 1, the MME 3 can instruct the user equipment 1 not to transmit a session management signal to the MME 3 subsequently. Furthermore, an amount of signals transmitted and received between the user equipment 1 and the MME 3 can be reduced, compared to the processing procedure illustrated in FIG. 14.

### (Modified example version 1)

In the processing procedure of step S108 and step S109 of FIG. 14, the connection restriction request signal is to be transmitted to the user equipment 1 by the NAS message; however, it may be transmitted to the user equipment 1 by using a message other than the NAS message.

At step S108, the communication processor 31 of the MME 3 transmits an S1-AP signal including a connection restriction request signal to the base station 2. Furthermore, the RRC controller 22 and the communication processor 21 of the base station 2 transmits an RRC signal including the connection restriction request signal to the user equipment 1. The RRC signal may be, for example, an RRC Connection Reconfiguration signal.

At step S109, the communication processor 11 of the user equipment 1 transmits an RRC signal including a connection restriction request response signal to the base station 2. The RRC signal may be, for example, an RRC Connection Reconfiguration Complete signal. The communication processor 21 of the base station 2 transmits an S1-AP signal including the connection restriction request response signal to the MME 3.

### (Modified example version 2)

In the processing procedures at step S108 of FIG. 14 and at step S207 of FIG. 15, one or more APNs may be included in the connection restriction request signal (the session management response signal), so that session management signals associated with any APN can be restricted. Furthermore, for each of the one or more APNs, an individual back-off timer may be specified. Furthermore, the connection restriction request signal (the session management response signal) may include information specifying whether a session management signal not associated with an APN is to be restricted.

The user equipment 1 that receives the connection restriction request signal (the session management response signal) does not transmit a session management signal associated with the APN specified in the connection restriction request signal (session management response signal) to the MME 3, during the time period specified by the back-off timer. In this manner, the MME 3 can restrict session management signals to be transmitted from the user equipment 1 by various methods.

### [3G]

### (Processing procedure (version 1))

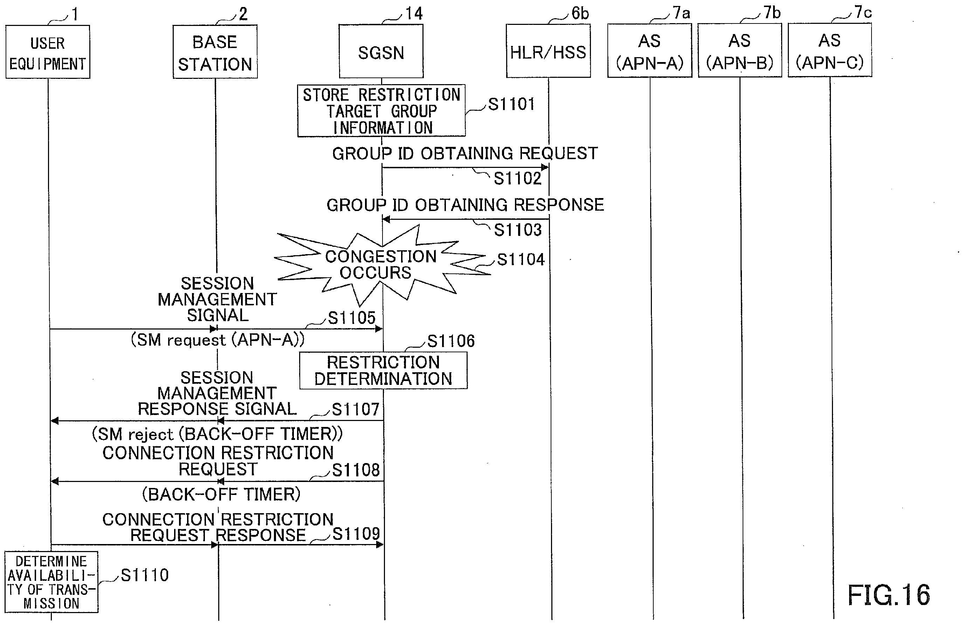

FIG. 16 is a sequence diagram illustrating an example of a processing procedure (version 1) to be performed by the communication system (3G) according to the embodiment.

At step S1101, the storage unit 134 of the SGSN 14 stores the restriction target group information in advance. The restriction target group information may be stored in advance, for example, by the O & M system.

At step S1102, the retrieval unit 132 of the SGSN 14 transmits a group ID obtaining request to the HLR/HSS 6a so as to obtain the group ID to which the user equipment 1 belongs. The group ID obtaining request includes an identifier (e.g., IMSI, TMSI, and MSISDN) for uniquely identifying the user equipment 1. Note that the processing procedure at step S1102 may be performed when the user equipment 1 requests an attach process from the SGSN 14; or may be performed at another timing at which the user equipment 1 accesses the SGSN 14.

At step S1103, the HLR/HSS 6a transmits a group ID obtaining response to the SGSN 14. The group ID obtaining response includes the group ID of the user equipment 1. The retrieval unit 132 of the SGSN 14 associates the received group ID of the user equipment 1 with the identifier for uniquely identifying the user equipment 1; and reports these to the restriction target determination unit 135. Here, it is assumed that the group ID of the user equipment 1 is "group 1."

As described above, the processing procedure from step S1101 to step S1103 is the processing procedure to be performed prior to occurrence of the congestion in the SGSN 14. In the following, the processing procedure is described, which is to be performed when the congestion occurs in the SGSN 14.

At step S1104, the load detector 133 of the SGSN 14 detects that congestion occurs in the SGSN 14.

At step S1105, the communication processor 11 of the user equipment 1 transmits a session management signal (SM Request) that specifies the APN-A to the SGSN 14, for a reason, for example, that it is desirable to establish a connection with the AS 7a again. Specifically, the SM Request is a NAS message, such as Activate PDP Context Request.

At step S1106, the restriction target determination unit 135 of the SGSN 14 searches the restriction target group information for and retrieves a group ID which is the target for which a session management signal is to be restricted; and confirms whether the group ID of the user equipment 1 obtained at step S1103 is included in the group ID which is the target of restriction. When it is determined that the group ID of the user equipment 1 is included in the group ID which is the target of restriction, the restriction target determination unit 135 determines that it is required for the user equipment 1 to suppress transmission of a session management signal for a certain period of time; and proceeds to the processing procedure at step S1107. However, if the group ID of the user equipment 1 is not included in the group ID which is the target of the restriction, the restriction target determination unit 135 determines that it is not required for the user equipment 1 to suppress transmission of a session management signal for a certain period of time; and continues call processing in accordance with the processing procedure specified for the usual 3G.

Note that, when the session management signal (SM Request) received at step S1105 is a signal related to an emergency call or a priority call, the restriction target determination unit 135 continues call processing according to the processing procedure specified for the usual 3G without performing the processing procedure at step S1106. In the following, the description is continued while assuming that the group ID which is the target of restriction includes the group 1, and a determination is made that it is required for the user equipment 1 to suppress transmission of a session management signal for a certain period of time (namely, a determination is made to proceed to step S1107).

At step S1107, the communication processor 131 of the SGSN 14 transmits a session management response signal (SM reject) including a back-off timer to the user equipment 1 so as to respond to the session management signal received at the processing procedure of step S1106.

At step S1108, the communication processor 131 of the SGSN 14 transmits a connection restriction request signal to the user equipment 1. The connection restriction request signal includes a back-off timer (the time period during which transmission a session management signal to the SGSN 14 is disallowed). Here, the connection restriction request signal may be a NAS message. The communication processor 11 of the user equipment 1 stores the back-off timer included in the received connection restriction request signal in the restriction information in the storage unit 12.

At step S1109, the communication processor 11 of the user equipment 1 transmits the connection restriction request response signal to the SGSN 14. Here, the connection restriction request response signal may be a NAS message.

At step S1110, for a case where it is attempted to transmit a session management signal to the SGSN 14, the communication processor 11 of the user equipment 1 queries permissibility/impermissibility of transmission of a session management signal to the determination unit 13. When the back-off timer has expired, or when the session management signal is a signal relating to an emergency call or a priority call, the determination unit 13 allows transmission of the session management signal. However, when the back-off timer has not expired, and when the session management signal is not a signal related to an emergency call nor a priority call, the determination unit 13 disallows transmission of the session management signal.

In the processing procedure described above by using FIG. 16, the process may proceed to the processing procedure of step S1108 without performing the processing procedure at step S1107. Furthermore, the SGSN 14 may perform the processing procedure on and after step S1108, regardless of whether a session management signal is received at the processing procedure of step S1105.

As described above, according to the processing procedure illustrated in FIG. 16, by only transmitting a single signal (the connection restriction request signal) to the user equipment 1, the SGSN 14 can instruct the user equipment 1 not to transmit a session management signal to the SGSN 14 subsequently.

In a usual group specific NAS level congestion control method, only transmission of a session management signal associated with a specific APN can be restricted. Accordingly, when a session management signal (SM Request) associated with another APN that is different from the specific APN is received from the user equipment, the SGSN 14 is required to transmit a session management response signal (SM reject) again.

In contrast, according to the embodiment, the SGSN 14 can uniformly suppress the user equipment 1 from transmitting session management signals. Namely, the SGSN 14 is not required to repeatedly transmit, for each APN, a session management response signal (SM reject) to the user equipment 1, so that a congestion state of the SGSN 14 can be efficiently mitigated.

Note that the processing procedure illustrated by using FIG. 16 may be applied to a mobility management signal (Mobility Management Signal) transmitted from the user equipment 1. For example, in the processing procedure at step S1110, the communication processor 11 of the user equipment 1 that receives the connection restriction request signal may be disallowed to transmit a mobility management signal to the SGSN 14 until expiration of the back-off timer. Mobility management signals that are targets of restriction include a mobility management signal associated with a specific APN (a mobility management signal for performing a process for the specified APN) and/or a mobility management signal not associated with an APN (a mobility management signal for performing a process which is not related to the APN). The mobility management signal is, for example, an Attach Request, a RA (Routing Area) Update, a Service Request, and so forth. In this manner, a congestion state of the SGSN 14 can be efficiently mitigated.

### (Processing procedure (version 2))

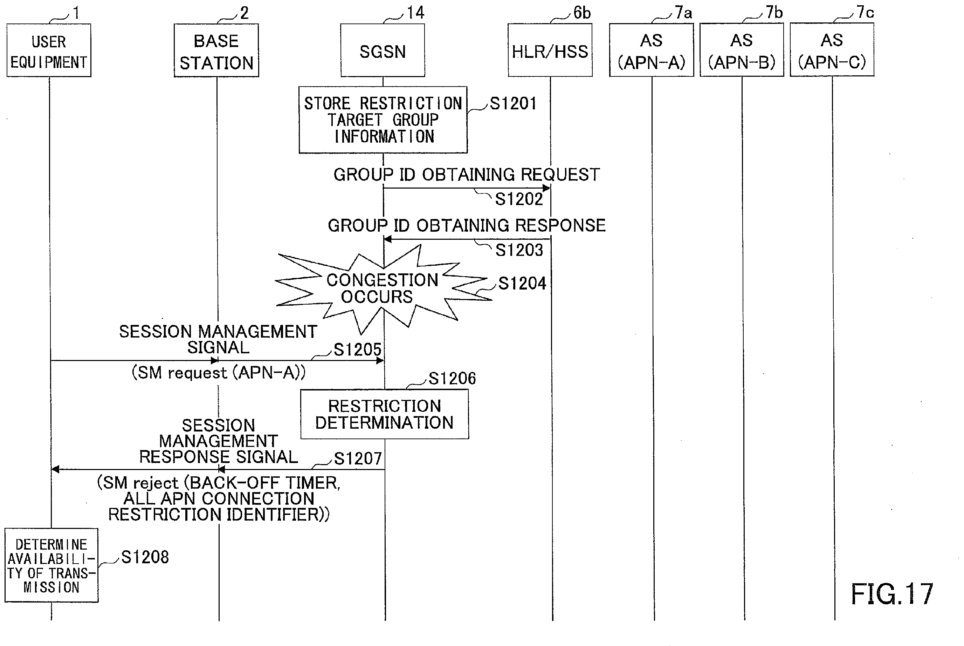

FIG. 17 is a sequence diagram illustrating an example of a processing procedure (version 2) to be executed by the communication system (3G) according to the embodiment. In the processing procedure (version 2), instead of transmitting the connection restriction request signal, an identifier for instructing to uniformly restrict transmission of session management signals is included in a session management response signal (SM reject), and transmits it. Here, points that are not particularly referred to may be the same as those of FIG. 16.

The processing procedures from step S1201 to step S1206 are the same as the processing procedures from step S1101 to step S1106 of FIG. 16, respectively, so that the descriptions are omitted. At step S1207, the communication processor 131 of the SGSN 14 transmits a session management response signal (SM reject) to the user equipment 1. The session management response signal includes "an all APN connection restriction identifier" for instructing to uniformly restrict transmission of session management signals, and "a back-off timer (a time period during which transmission of a session management signal to the SGSN 14 is disallowed)." The communication processor 11 of the user equipment 1 stores, in the restriction information in the storage unit 12, a back-off timer included in the received session management response signal. Note that, the all APN connection restriction identifier may be referred to as "an All APN congestion indicator," for example.

The processing procedure at step S1208. is the same as that of step S1110 in FIG. 16, so that the description is omitted.

As described above, according to the processing procedure illustrated in FIG. 17, by only transmitting a single signal (the session management response signal) to the user equipment 1, the SGSN 14 can instruct the user equipment 1 not to transmit a session management signal to the SGSN 14 subsequently. Furthermore, an amount of signals transmitted and received between the user equipment 1 and the SGSN 14 can be reduced, compared to the processing procedure illustrated in FIG. 16.

### (Modified example version 1)

In the processing procedure of step S1108 and step S1109 of FIG. 16, the connection restriction request signal is to be transmitted to the user equipment 1 by the NAS message; however, it may be transmitted to the user equipment 1 by using a message other than the NAS message.

At step S2108, the communication processor 131 of the SGSN 14 transmits an S1-AP signal including a connection restriction request signal to the base station 2. Furthermore, the RRC controller 22 and the communication processor 21 of the base station 2 transmits an RRC signal including the connection restriction request signal to the user equipment 1. The RRC signal may be, for example, an RRC Connection Reconfiguration signal.

At step S1109, the communication processor 11 of the user equipment 1 transmits an RRC signal including a connection restriction request response signal to the base station 2. The RRC signal may be, for example, an RRC Connection Reconfiguration Complete signal. The communication processor 21 of the base station 2 transmits a RANAP signal including the connection restriction request response signal to the SGSN 14.

### (Modified example version 2)

In the processing procedures at step S1108 of FIG. 16 and at step S1207 of FIG. 17, one or more APNs may be included in the connection restriction request signal (the session management response signal), so that session management signals associated with any APN can be restricted. Furthermore, for each of the one or more APNs, an individual back-off timer may specified. Furthermore, the connection restriction request signal (the session management response signal) may include information specifying whether a session management signal not associated with an APN is to be restricted.

The user equipment 1 that receives the connection restriction request signal (the session management response signal) does not transmit a session management signal associated with the APN specified in the connection restriction request signal (session management response signal) to the SGSN 14, during the time period specified by the back-off timer. In this manner, the SGSN 14 can restrict session management signals to be transmitted from the user equipment 1 by various methods.

### <Conclusion>

As described above, according to the embodiment, there is provided a mobility management switching center for communicating with user equipment of a communication system that supports LTE or 3G, the mobility management switching center including a receiver that receives a session management signal from the user equipment; and a transmitter that transmits, when the session management signal is received, a restriction signal for instructing not to transmit a new session management signal to the user equipment. By the mobility management switching center, technology is provided that allows a congestion state of the mobility management switching center to be efficiently mitigated.

Additionally, it may further include a storage unit that stores restriction target group information indicating a group to be restricted; a retrieval unit that retrieves a group to which the user equipment belongs from a subscriber management device; and a determination unit that retrieves the group to be restricted from the restriction target group information when the mobility management switching center is in a congestion state, and that determines to transmit the restriction signal to the user equipment when the group to which the user equipment belongs is included in the retrieved group to be restricted, wherein, when the determination unit determines that the restriction signal is to be transmitted to the user equipment, the transmitter transmits the restriction signal to the user equipment. With this configuration, the MME 3 or the SGSN 14 can transmit the restriction signal only to the user equipment 1 belonging to a specific group.

Further, the transmitter may cause a time period for restricting transmission of a new session management signal to be included in the restriction signal, and transmits the restriction signal to the user equipment. With this configuration, the MME 3 or the SGSN 14 can restrict the user equipment 1 from transmitting a session management signal in the time period specified by a back-off timer.

Further, the session management signal may be an ESM Request or a SM Request, and the restriction signal may be a NAS message, a S1-AP, a RANAP, or a RRC signal.

Further, according to the embodiment, there is provided a communication system that supports LTE or 3G, and that includes a mobility management switching center and user equipment, wherein the mobility management switching center includes a first receiver that receives a session management signal from the user equipment; and a first transmitter that transmits, to the user equipment, a restriction signal for instructing not to transmit a new session management signal, when the session management signal is received, and wherein the user equipment includes a second receiver that receives the restriction signal; and a second transmitter that controls, when the restriction signal is received from the mobility management switching center, not to transmit a new session management signal to the mobility management switching center. By the communication system, technology is provided that can efficiently mitigate a congestion state of the mobility management switching center.

Furthermore, according to the embodiment, there is provided a communication control method to be executed in a communication system that supports LTE or 3G and that includes a mobility management switching center and user equipment, the communication control method including a step of receiving, by the mobility management switching center, a session management signal from the user equipment; a step of transmitting, to the user equipment by the mobility management switching center, a restriction signal for instructing not to transmit a connection request signal with respect to all APNs when the session management signal is received; a step of receiving the restriction signal by the user equipment; and a step of controlling, by the user equipment, not to transmit a new session management signal to the mobility management switching center when the restriction signal is received from the mobility management switching center. By the communication control method, technology is provided that can efficiently mitigate a congestion state of the mobility management switching center.

Additionally, the "unit" in the configuration of each of the above-described devices may be replaced with "part," "circuit," "device," and so forth.

### <Supplement to the embodiment>

The configuration of each of the devices (the user equipment 1/the base station 2/the MME 3/the SGSN 14) described in the embodiment may be a configuration that is implemented by executing a program by the CPU (processor) in the device including the CPU and the memory; a configuration that is implemented by hardware provided with a logic for the process described in the embodiment, such as a hardware circuit; or a mixture of programs and hardware.

The embodiment of the present invention is described above; however the disclosed invention is not limited to the embodiment, and a person ordinarily skilled in the art will appreciate various variations, modifications, alternatives, replacements, and so forth. Specific examples of numerical values are used in the description in order to facilitate understanding of the invention. However, these numerical values are merely an example, and any other appropriate values may be used, except as indicated otherwise. The separations of the items in the above description are not essential to the present invention. Depending on necessity, subject matter described in two or more items may be combined and used, and subject matter described in an item may be applied to subject matter described in another item (provided that they do not contradict). A boundary of a functional unit or a processor in the functional block diagrams may not necessarily correspond to a boundary of a physical component. An operation by a plurality of functional units may be physically executed by a single component, or an operation of a single functional unit may be physically executed by a plurality of components. In the sequence charts and the flowcharts described in the embodiment, the order can be replaced, provided that there is no contradiction. For the convenience of description, the user equipment 1, the base station 2, the MME 3, and the SGSN 14 are described by using the functional block diagrams; however, such devices may be implemented in hardware, software, or combinations thereof. Each of the software to be operated by the processor included in the user equipment 1 in accordance with the embodiment of the present invention, the software to be operated by the processor included in the base station 2, the software to be operated by the processor included in the MME 3 in accordance with the embodiment of the present invention may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, and so forth.

The present invention is not limited to the above-described embodiment; and various variations, modifications, alternatives, replacements, and so forth are included in the present invention without departing from the spirit of the present invention.

Note that, in the embodiment, the MME 3 or the SGSN 14 is an example of the mobility management switching center. The communication processor 31 or the communication processor 131 is an example of the first receiver. The communication processor 31 and the restriction target determination unit 35, or the communication processor 131 and the restriction target determination unit 135 are an example of the first transmitter. The retrieval unit 32 or the retrieval unit 132 is an example of the retrieval unit. The restriction target determination unit 35 or the restriction target determination unit 135 is an example of the determination unit. The connection restriction request signal or the session management response signal (ESM Reject, SM Reject) is an example of the restriction signal. The communication processor 11 is an example of the second receiver. The communication processor 11 and the determination unit 13 are an example of the second transmitter.

This patent application is based upon and claims the benefit of priority of Japanese Patent Applications No. 2015-094271 filed on May 1, 2015; No. 2015-100560 filed on May 15, 2015; No. 2015-156477 filed on August 6, 2015 and the entire contents of Japanese Patent Applications No. 2015-094271, No. 2015-100560, and No. 2015-156477 are incorporated herein by reference.

### LIST OF REFERENCE SYMBOLS

1: user equipment
2: base station
3: MME
4: S-GW
5: P-GW
6a: HSS
6b: HLR/HSS
7: AS
14: SGSN
15: GGSN
11: communication processor
12: storage unit
13: determination unit
21: communication processor
22: RRC controller
31, 131: communication processor
32, 132: retrieval unit
33, 133: load detector
34, 134: storage unit
35, 135: restriction target determination unit
101: RF module
102: BB module
103: UE control module
201: RF module
202: BB module
203: device control module
204: communication IF
301: CPU
302: ROM
303: RAM
304: HDD
305: operation unit
306: display unit
307: drive device
308: NIC

## Claims

1. A mobility management switching center for communicating with user equipment of a communication system that supports LTE or 3G, the mobility management switching center comprising:
a receiver that receives a session management signal from the user equipment; and
a transmitter that transmits, when the session management signal is received, a restriction signal for instructing not to transmit a new session management signal to the user equipment.

2. The mobility management switching center according to claim 1, further comprising:
a storage unit that stores restriction target group information indicating a group to be restricted;
a retrieval unit that retrieves a group to which the user equipment belongs from a subscriber management device; and
a determination unit that retrieves the group to be restricted from the restriction target group information when the mobility management switching center is in a congestion state, and that determines to transmit the restriction signal to the user equipment when the group to which the user equipment belongs is included in the retrieved group to be restricted,
wherein, when the determination unit determines that the restriction signal is to be transmitted to the user equipment, the transmitter transmits the restriction signal to the user equipment.

3. The mobility management switching center according to claim 1 or 2, wherein the transmitter causes a time period for restricting transmission of a new session management signal to be included in the restriction signal, and transmits the restriction signal to the user equipment.

4. The mobility management switching center according to any one of claims 1 to 3, wherein the session management signal is an ESM Request or a SM Request, and the restriction signal is a NAS message, a Sl-AP, a RANAP, or a RRC signal.

5. A communication system that supports LTE or 3G and that includes a mobility management switching center and user equipment, wherein the mobility management switching center comprises:
a first receiver that receives a session management signal from the user equipment; and
a first transmitter that transmits, to the user equipment, a restriction signal for instructing not to transmit a new session management signal, when the session management signal is received, and
wherein the user equipment includes a second receiver that receives the restriction signal; and
a second transmitter that controls, when the restriction signal is received from the mobility management switching center, not to transmit a new session management signal to the mobility management switching center.

6. A communication control method to be executed in a communication system that supports LTE or 3G and that includes a mobility management switching center and user equipment, the communication control method comprising:
a step of receiving, by the mobility management switching center, a session management signal from the user equipment;
a step of transmitting, to the user equipment by the mobility management switching center, a restriction signal for instructing not to transmit a new session management signal when the session management signal is received;
a step of receiving the restriction signal by the user equipment; and
a step of controlling, by the user equipment, not to transmit a new session management signal to the mobility management switching center when the restriction signal is received from the mobility management switching center.
